# EUROPÄISCHE PATENTANMELDUNG

(11) **EP 1 046 901 A2**
(43) Veröffentlichungstag der Anmeldung: **25.10.2000**
(21) Anmeldenummer: 00108145.4
(22) Anmeldetag: 13.04.2000
(51) Int. Cl.: G01N 21/59

(54) **Verfahren und Vorrichtung zur automatischen Reinigung von optoelektronischen Sensorsystemen zur Stoffanalyse**

(30) Priorität: 19.04.1999 DE 19917632
(71) Anmelder: Krieg, Gunther, Prof.Dr.Ing., D-76227 Karlsruhe (DE)
(72) Erfinder: Koukolitschek, Karl, Dipl.-Ing., 76189 Karlsruhe (DE); Krieg, Gunther, Prof. Dr.Ing., 76227 Karlsruhe (DE); Maier, Wilfried, 57056 Sulzfeld (DE)
(74) Vertreter: Lempert, Jost, Dipl.-Phys. Dr. rer.nat.

(57) **Zusammenfassung**

Die Erfindung betrifft ein Verfahren sowie Vorrichtungen zur automatischen Reinigung von prozeßtechnisch genutzten optoelektronischen Meßsystemen zur Stoffanalyse in Flüssigkeiten und Gasen unter Ausnutzung von optischer Absorption und Fluoreszenz. Das Verfahren ist dadurch gekennzeichnet, daß der Verschmutzungsgrad vom optoelektronischen Sensorsystem selbst detektiert wird und daß bei vorgewähltem Verschmutzungsgrad eine Reinigungsflüssigkeit die verschmutzungsempfindlichen optischen Komponenten reinigt und die verbleibende Restverschmutzung erfaßt und in der Signalauswertung quantitativ berücksichtigt und eliminiert wird.

## Beschreibung

Die bekannten optoelektronischen Sensorsysteme zur Stoffanalyse, z.B. durch Messung der Absorption oder der Fluoreszenz weisen die entscheidenden Vorteile der Selektivität, der hohen Sensitivität und der Möglichkeit zur schnellen Erfassung der jeweiligen Typen und der Konzentrationen der interessierenden Stoffe in flüssigen, gasförmigen und festen Stoffgemischen auf. Diese entscheidenden Vorteile sind jedoch notgedrungen begleitet von dem Nachteil der Verschmutzung wichtiger optischer Komponenten, wie z.B. von optischen Meßzellen, optischen Fenstern, optischen Strahlungsquellen und optischen Sensoren, welche zu Meßfehlern bzw. zu einem Totalausfall der Messung führen können. Zwar sind gemäß dem Stand der Technik verschiedene Verfahren und Vorrichtungen bekannt geworden, wie z.B. das Multi-wellenlängen-Verfahren unter Einsatz von einer oder mehrerer Referenzwellenlängen gemäß Patenten P 40 30 959, P 40 30 960, EP 91 102 499, DE 198 494 847. Ferner werden, um den Verschmutzungseffekt zu kompensieren, nicht nur die durch die Stoffgemische transmittierten Strahlungen unterschiedlicher Wellenlängen sondem auch die von den Strahlungsquellen direkt zum jeweiligen Zeitpunkt ausgesandte Strahlung von einem Referenzsensor, z.B. gemäß Patenten DE 36 15 259 , P 41 38 419, EP 0383 072, erfaßt und bei der Signalauswertung berücksichtigt

Diese Verfahren stoßen jedoch in nahezu allen praktischen Fällen an Grenzen, weil sogenannte nicht-graue Verschmutzungen einerseits zu spektralen Störungen führen, die von den Kompensationsverfahren gemäß dem Stand der Technik nicht vollständig eliminiert werden können und weil andererseits in der Praxis vorkommende sehr starke Verschmutzungen die Lichtintensitäten der unterschiedlichen Strahlen so stark schwächen können, daß das verbleibende Restlicht für die Messung nicht mehr ausreicht Diese Fälle treten z.B. unvermeidlich bei der Messung von Isopropanol oder von Isopropanol-Ersatzstoff-Gemischen im Feuchtwasser von Offset-Druckmaschinen auf, da der Salzeintrag des zu bedruckenden Papiers, Schwebstoffe aus dem Papier, Fremdstoffe aus der Farbe, chemische Additive u.s.w., die zu messende Flüßigkeit verschmutzen, als Folge die optische Messung verfälschen und schließlich ganz verhindern.

Entsprechende Effekte treten auch dann auf, wenn versucht wird, die interessierenden Stoffe in der über der Flüssigkeit befindlichen Gasphase, d.h. im sog. "Headspace", zu messen, da die durch die Bewegung des Feuchtwassers hervorgerufenen Aerosole die oben genannten Schmutz- / Störstoffe ebenfalls enthalten und diese selbst bei Einsatz von feinporigen Filtern an den Oberflächen der optischen Komponenten sich niederschlagen.

Die Aufgabenstellung der vorliegenden Erfindung besteht daher darin, den physikalisch unvermeidlichen Niederschlag von Schmutz- und Störstoffen auf optischen Komponenten von Sensorsystemen zur quantitativen Messung der Konzentrationen der in Flüssigkeiten, bzw. Gasen und Festkörpern, enthaltenen Substanzen automatisch zu entfernen, um zu jedem Zeitpunkt eine richtige und störungsfreie Messung garantieren zu können. Die Schwierigkeit dieser verfahrenstechnischen Maßnahme besteht dabei insbesondere darin, weder die Prozeßtechnik zu stören, d.h. insbesondere keine spürbaren Unterbrechungen in den Meß- und Nachdosiervorgängen, z.B. von Isopropanol oder von Ersatzstoffen, noch Auswirkungen von physikalisch unvermeidbaren Restverschmutzungen, die ja nach Verschmutzungstyp zeitlich schwanken können, auf das aktuelle Meßergebnis, hervorzurufen.

Die vorliegende Erfindung löst diese schwierige Aufgabenstellung, die beispielsweise im Offsetdruck, jedoch auch bei vielen anderen praktischen Anwendungsfällen, aufgrund der Forderung nach einem Automatisierungsgrad von 100 %, d.h. ohne jeden manuellen Eingriff, bisher nicht gelöst werden konnte, einerseits durch den zyklischen Einsatz von Reinigungsflüssigkeiten und andererseits durch zusätzliche kombinierte Anwendung von Referenzflüssigkeiten. Die Erfindung umfaßt ebenso die vom optoelektronischen Sensorsystem zur Stoffanalyse gesteuerte zeitliche Auslösung der oben genannten Lösungsmaßnahmen sowie die Steuerung von Ventilen zur Aktivierung der Reinigungs- und Referenzflüssigkeits-Kreisläufe einschließlich der hermetischen Abdichtung dieser Kreisläufe unter sich sowie gegenüber den Prozeßkreisläufen, z.B. den Feuchtwasserkreisläufen einer Offset-Druckmaschine.

Zur näheren Erläuterung der vorliegenden Erfindung sind einzelne Ausführungsformen im folgenden näher erläutert. Dazu zeigen:
- Fig. 1: Die beispielhafte Ausführung eines optoelektronischen Sensorsystems zur Stoffanalyse in Flüssigkeitsgemischen unter Einsatz des vollautomatischen Reinigungs- und Referenzflüssigkeits-Systems am Beispiel der Isopropanolkonzentrationsbestimmung im Feuchtwasser von Offset-Druckmaschinen.
- Fig. 2: Die entsprechende Ausführung eines optoelektronischen Sensorsystems zur Stoffanalyse von Gasgemischen mit automatischer Reinigung der optoelektronischen Systemkomponenten einschließlich des Referenzflüssigkeitssystems.
- Fig. 3: Eine spezielle, beispielhafte, verfahrenstechnische Ausführung des automatischen Reinigungs- bzw. Referenz-Systems für die Offset-Druckindustrie

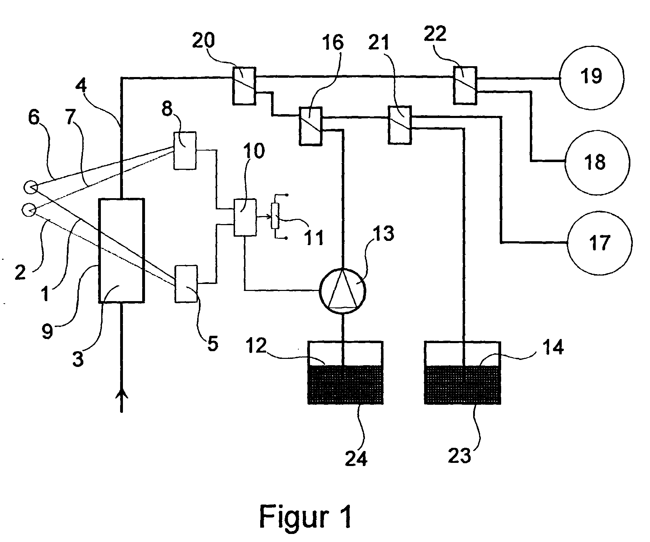

Gemäß Figur 1 durchstrahlen gemäß dem Stand der Technik der Prozeß-Absorptionsspektrometrie ein Meßstrahl (1) und ein Referenzstrahl (2) die Meßzelle (3), die von der zu untersuchenden Prozeßflüssigkeit (4) kontinuierlich durchströmt wird und treffen auf einen gemeinsamen Meßsensor (5). Zusätzlich werden der Teil-Meßstrahl (6) und der Teil-Referenzstrahl (7) von einem Referenzsensor (8), welcher aus derselben Herstellungscharge wie der Meßsensor stammt, erfaßt Die Signale von Meßsensor (5) und Referenzsensor (8) werden gemäß dem Stand der Technik z.B. durch eine analoge Schaltung (10) oder z.B. durch einen Mikroprozessor, die beide in Figur 1 nicht dargestellt sind, in das jeweilige Konzentrationssignal, z.B. der Konzentration von Isopropanol im Feuchtwassergemisch einer Offset-Druckmaschine, umgerechnet Im Falle einer stärkeren Verschmutzung der Innenwand fällt die Intensität des Referenzstrahles (2) unter eine z.B. durch einen Schwellwertgeber (11) vorgegebene Schwelle ab. Dementsprechend wird ein Reinigungskreislauf aktiviert, weicher eine Reinigungsflüssigkeit (12) durch die Meßzelle (3) mittels einer Förderpumpe (13) transportiert. Die Zeitdauer des Reinigungsvorganges richtet sich entweder nach den Erfordernissen des Prozesses, indem Pausen im Meß-und Dosiervorgang ausgenutzt werden oder indem das Über- oder das Unterschreiten spezieller Schwellen in der Intensität des Referenzstrahles (2) den Reinigungsprozeß ein- bzw. ausschalten. Da die Schwierigkeit besteht die Effizienz des Reinigungsprozesses vorauszuberechnen, d.h. da in der Regel eine undefinierte Restverschmutzung nach dem jeweiligen Reinigungsprozeß unvermeidlich ist, wird gemäß dieser Erfindung der Status der Verschmutzung durch anschließende Spülung der Meßzelle (3) mit einer Referenzflüssigkeit (14) und Auswertung der vom Meßstrahl (1) und vom Referenzstrahl (2) transmittierten Lichtintensitäten erfaßt Beispielsweise wird im Falle der Messung der Isopropanol-Konzentration oder der Ersatzstoff-Konzentration im Feuchtwasser von Offset-Druckmaschinen eine Referenzmessung mit Wasser als Referenzflüssigkeit (14), welche über Ventile (16), (21) direkt dem jeweiligen Wasserkreislauf (17) entnommen werden, durchgeführt. Sofern sich bei dieser Maßnahme nicht die Isopropanol-Konzentration 0,0 %-Vol. ergibt, regelt das Sensorsystem automatisch durch eine Offset-Korrektur auf diesen Wert nach. Außer bzw. neben der in der regetprozeßtechnisch sehr einfach verfügbaren Referenzflüssigkeit Wasser können auch andere Referenzflüssigkeiten, z.B. Isopropanol / Wassergemische bekannter Konzentration, zur Kalibrierung herangezogen werden. Die verschiedenen Kreisläufe, d.h. der Prozeßkreislauf (18), der Wasserkreislauf (17) / der Referenzkreislauf (17) und der Dosierkreislauf (19) sind durch die Ventile (16), (20), (21), (22), die elektromagnetisch gesteuert werden, von einander getrennt, so daß jederzeit gewährleistet ist, daß die Flüssigkeit eines Kreislaufes nicht mit den Flüssigkeiten der beiden anderen Kreisläufe kontaminiert wird. Die Reinigungsflüssigkeit sowie die Referenzflüssigkeiten sind in verschiedenen Behältern (23), (24) enthalten. Die zeitliche Schaltung der Ventile (16), (20), (21), (22) erfolgt stets so, daß Reinigungsmittel weder in den Prozeßkreislauf noch in den Wasserkreislauf, noch in den Dosierkreislauf gelangt und daß überschüssiges Wasser ausschließlich dem Prozeßkreislauf zugeführt wird.

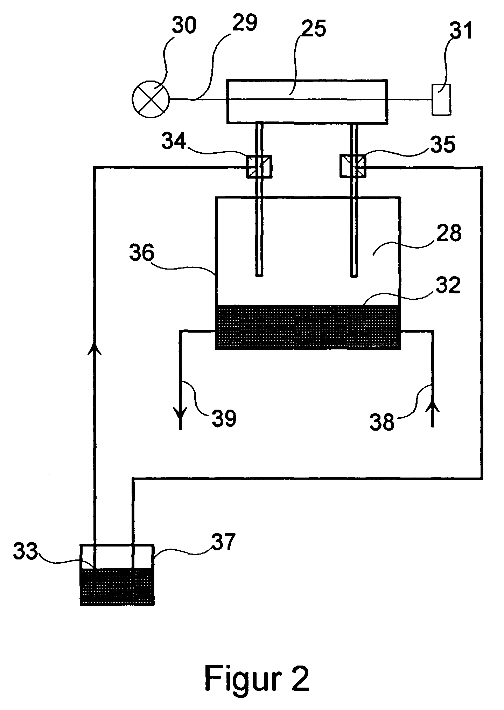

Gemäß Figur 2 wird die Verschmutzung eines optoelektronischen Stoffanalysesystems zur Messung der Konzentrationen verschiedener Stoffkomponenten in der Gasphase (25), auch "Headspace" genannt mit einem nach dem selben Verfahren arbeitenden automatischen Reinigungssystem gemäß Figur 1 in engen Grenzen gehalten. Das Gasgemisch (28), welches repräsentativ für die Zusammensetzung des Stoffgemisches in der Flüssigkeit (32) ist, wird gemäß dem Stand der Technik durch einen oder mehrere Lichtstrahlen (29), welche von mindestens einer Lichtquelle (30) erzeugt werden und deren Schwächungen von einem optischen Sensor (31) detektiert werden, analysiert. Die zyklische Reinigung der optischen Komponenten erfolgt wie im Fall der Figur 1 durch eine Reinigungsflüssigkeit (33), die über ein Ventil (34) gemäß dem Stand der Technik, den "Headspace"-Raum (25) durchströmt Zur Referenzbildung kann analog zu Figur 1 der Meßzellenraum (25) mit Wasser oder einer Referenzflüssigkeit (33) bekannter Zusammensetzung geflutet werden. Alternativ oder zusätzlich kann nach erfolgter Reinigung der Headspace (25) mit einem Referenzgas definierter Zusammensetzung gespült werden. Sofern die Reinigungsflüssigkeit (33) artverwandt oder identisch ist mit der Prozeßflüssigkeit (32), welche über Leitungssysteme (38), (39) dem nicht gezeichneten Prozeß im Kreislauf entnommen und wieder zurrückgeführt wird, kann die Reinigungsflüssigkeit in den Feuchtmittelbehälter (38) zurückgeleitet werden. Im anderen Fall wird durch ein zusätzliches Ventil (35) die Reinigungsflüssigkeit in den Reinigungsbehälter (37) zurückgeführt.

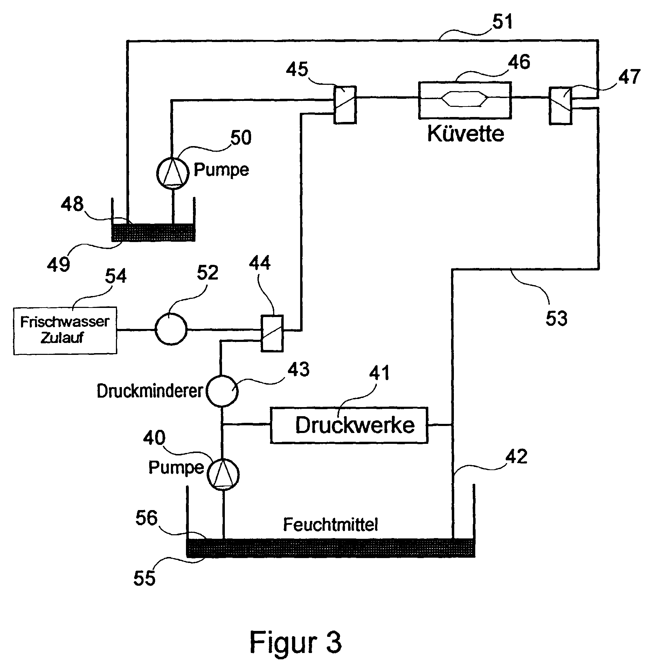

Gemäß Figur 3 wird das Feuchtmittel (56) aus dem Feuchtmittelbehälter (55) mittels einer Pumpe (40) den Druckwerken (41) zugeführt und über die Rücklaufleitung (42) wieder in den Feuchtmittelbehälter (55) zurückgeleitet. Ein Teil des Feuchtmittels wird als Bypass über einen Druckminderer (43) und die Ventile (44), (45), der Meßzelle (46) zugeführt und über das Ventil (47) und die Leitung (53) wieder in den Feuchtmittelbehälter (55) zurückgeleitet. Für den Fall, daß der in Figur 1 erläuterte Reinigungsvorgang durch Überschreiten des voreingestellten Schwellwertes (11) eintritt, wird eine Reinigungsflüssigkeit (48) aus dem Reinigungsbehälter (49) mittels einer Pumpe (50) über das Ventil (45) der Meßzelle (46) zugeführt. Alternativ kann Frischwasser (54), z.B. zu Spülzwecken, über einen Druckminderer (52), die Ventile (44) und (45) der Meßzelle (46) zugeführt und über die Rücklaufleitung (53) dem Prozeßkreislauf (42) übergeben werden.

## Patentansprüche

1. Verfahren zur automatischen Reinigung von optoelektronischen Sensorsystemen zur Stoffanalyse von flüssigen und gasförmigen Stoffgemischen unter Nutzung von optischer Absorption und Fluoreszenz, dadurch gekennzeichnet daß der Verschmutzungsgrad vom optoelektronischen Sensorsystem selbst detektiert und bei vorgegebenen Verschmutzungsgrad die verschmutzungsempfindlichen optischen Oberflächen des Sensorsystems mit einer Reinigungsflüssigkeit überflutet werden.

2. Verfahren nach Anspruch 1, dadurch gekennzeichnet daß der Schwellwert, bei dem die automatische Reinigung einsetzt, mittels eines Schwellwertgebers einstellbar ist.

3. Verfahren nach Anspruch 1 und 2, dadurch gekennzeichnet daß der "Haedspace "-Meßraum zur Messung von gasförmigen Stoffgemischen durch eine Reinigungsflüssigkeit geflutet wird.

4. Verfahren nach Anspruch 1 bis 3, dadurch gekennzeichnet, daß die Renigungsflüssigkeit wieder in den Reinigungsflüssigkeitsbehälter zurückgeleitet wird und nicht zur Vermischung mit der Prozeßflüssigkeit führt.

5. Verfahren nach Anspruch 1 bis 4, dadurch gekennzeichnet, daß die jeweilige Restverschmutzung nach erfolgter Reinigung vom Sensorsystem erfaßt und in die Meßsignalauswertung einbezogen wird.

6. Verfahren nach Anspruch 1 bis 5, dadurch gekennzeichnet, daß die Restverschmutzung bei gleichzeitiger Anwesenheit eines Referenzmediums im optischen Strahlengang ermittelt und bei der mikroelektronischen Auswertung berücksuchtigt wird.

7. Verfahren nach Anspruch 1 bis 6 dadurch gekennzeichnet daß als Referenzmedium ein nicht verschmutztes Stoffgemisch oder ein reiner Stoffbe kannter Zusammensetzung verwendet werden.

8. Verfahren nach Anspruch 1 bis 7, dadurch gekennzeichnet daß als Referenzmedium eine Flüssigkeit verwendet wird.

9. Verfahren nach Anspruch 1 bis 7, dadurch gekennzeichnet, daß als Referenzmedium ein Gas oder ein Gasgemisch verwendet werden.

10. Verfahren nach Anspruch 1 bis 9, dadurch gekennzeichnet, daß das jeweilige Referenzmedium sowie die Reinigungsflüssigkeit in separaten und geschlossenen Kreisläufen ohne Vermischungen über die verschmutzungsempfindlichen optischen Oberflächen des Sensorsystems geleitet werden

11. Verfahren nach Anspruch 1 bis 10, dadurch gekennzeichnet daß als Reinigungsflüssigkeit ein alkalischer Stoff verwendet wird.

12. Verfahren nach Anspruch 1 bis10, dadurch gekennzeichnet, daß als Reinigungsflüssigkeit eine Säure eingesetz wird.

13. Verfahren nach Anspruch 1 bis 10, dadurch gekennzeichnet, daß Tenside zur Reinigung herangezogen werden.

14. Vorrichtung zur automatischen Reinigung von optoelektronischen Sensorsystemen zur Stoffanalyse von flüssigen und gasförmigen Stoffgemischen unter Nutzung von optischer Absorption und Fluoreszenz, dadurch gekennzeichnet, daß der Verschmutzungsgrad über die Schwächung mindestens eines Lichtstrahls (2), (29) des optoelektronischen Sensorsystems (9), (25), (46) automatisch detektiert und bei Erreichen einer vorgegebenen Lichtabschwächung, welche durch mindestens einen Sensor (5), (31) mit nachgeschalteter Auswerteelektronik (10) und einem Schwellwertgeber (11) die Überflutung des optoelektronischen Systems (9), (25), (46) mit einer Reinigungsflüssigkeit (12), (33), (48) ausgelöst wird.

15. Vorrichtung nach Anspruch 14, dadurch gekennzeichnet, daß nach erfolgter Reinigung die resultierende Restverschmutzung des optoelektronischen Sensorsysems (9), (25), (46) mittels Sensoren (5), (31) und einer optoelektronischen Signalverarbeitung (10) erfaßt und das Ergebnis zur Korrektur der Meßwerte bei Prozeßbetrieb herangezogen wird.

16. Vorrichtung nach Anspruch 14 bis 15, dadurch gekennzeichnet, daß die Restverschmutzung bei Anwesenheit einer Referenzflüssigkeit (3), (25) bekannter Zusammensetzung bestimmt wird.

17. Vorrichtung nach Anspruch 14 bis 15, dadurch gekennzeichnet daß die Restverschmutzung bei Anwesenheit eines Referenzgasesn bzw. Referenzgasgemisches (3), (25) bekannter Zusammensetzung bestimmt wird.

18. Vorrichtung nach Anspruch 14 bis 17, dadurch gekennzeichnet daß die Kreisläufe für die Reinigungsflüssigkeit (12), (33), (48) der Refernzflüssigkeit (14), (17), (54) die Prozeßflüssigkeit (19), (38), (56) durch die Ventile (16), (20), (22), (34), (35), (45), (47) hermetisch gegeneinander abgedichtet sind.
